# EUROPÄISCHE PATENTSCHRIFT

(11) **EP 1 027 776 B1**
(45) Veröffentlichungstag und Bekanntmachung des Hinweises auf die Patenterteilung: **31.10.2001**
(21) Anmeldenummer: 98952516.7
(22) Anmeldetag: 27.08.1998
(51) Int. Cl.: H04B 7/26, H04J 3/22, H04J 13/02

(54) **VERFAHREN, MOBILSTATION UND BASISSTATION ZUR INFORMATIONSÜBERTRAGUNG ÜBER EINE FUNKSCHNITTSTELLE EINES MOBILKOMMUNIKATIONSSYSTEMS**
METHOD, MOBILE STATION AND BASE STATION FOR TRANSMITTING INFORMATION VIA A RADIO INTERFACE OF A MOBILE COMMUNICATIONS SYSTEM
PROCEDE, STATION MOBILE ET STATION DE BASE DESTINES A LA TRANSMISSION D'INFORMATIONS PAR UNE INTERFACE RADIO D'UN SYSTEME DE COMMUNICATION MOBILE

(30) Priorität: 27.10.1997 DE 19747452
(43) Veröffentlichungstag der Anmeldung: 16.08.2000
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: DE9802526
(87) Internationale Veröffentlichungsnummer: WO9922467

(56) Entgegenhaltungen:
- EP-A- 0 680 168
- US-A- 5 373 502
- US-A- 5 533 013
- KLEIN A ET AL: "FRAMES multiple access mode 1-wideband TDMA with and without spreading" WAVES OF THE YEAR 2000+ PIMRC '97. THE 8TH IEEE INTERNATIONAL SYMPOSIUM ON PERSONAL, INDOOR AND MOBILE RADIO COMMUNICATIONS. TECHNICAL PROGRAM, PROCEEDINGS (CAT. NO.97TH8271), PROCEEDINGS OF 8TH INTERNATIONAL SYMPOSIUM ON PERSONAL, INDOOR AND MOBILE , Seiten 37-41 vol.1, XP002094062 ISBN 0-7803-3871-5, 1997, New York, NY, USA, IEEE, USA

## Beschreibung

Die Erfindung betrifft ein Verfahren zur Informationsübertragung über eine Funkschnittstelle eines Mobil-Kommunikationssystems, sowie eine Mobilstation und eine Basisstation zur Durchführung des Verfahrens.

Der Aufbau von digitalen Funk-Kommunikationssystemen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman, "Paging in UMTS", RACE Mobile Telecommunications Workshop, Vol. 1, Amsterdam, NL, 17.-19. Mai 1994, S.405-410, gezeigt.

Das gegenwärtig existierende Mobilfunksystem GSM (Global System for Mobile Communications) ist ein Funk-Kommunikationssystem mit einer TDMA-Komponente zur Teilnehmerseparierung (time division multiple access). Gemäß einer Rahmenstruktur werden Informationen der Teilnehmarverbindungen zwischen Mobilstationen und Basisstationen in Zeitschlitzen übertragen. Die Übertragung erfolgt blockweise.

Aus der Offenlegungsschrift DE 42 10 305 A1 ist ein Verfahren zur Datenübertragung mit veränderlichem Verkehrsaufkommen bekannt, bei dem ein bestimmter Zeitabschnitt eines Datenstroms in Teile aufgeteilt wird, deren Anzahl vom Verkehrsaufkommen abhängt. Die verschiedenen Teile sind dabei mit mehr oder weniger vielen, zueinander orthogonalen Kodes kodiert, sodaß ein gemischtes TDMA/CDMA-System (CDMA, code division multiple access) entsteht.

Aus der EP 0 680 168 A2 ist eine Konfiguration zur Optimierung des Übertragungsmediums eines Kommunikationssystems bekannt. Dabei wird vorgeschlagen, das zur Verfügung stehende Spektrum des Übertragungsmediums so aufzuteilen, dass die einzelnen Teile den Teilnehmern abhängig von deren Bedarf zugewiesen und für die Datenübertragung genutzt werden können. Gemäß einem Ausführungsbeispiel umfassen die Teile eine Zeit, eine Frequenz- und eine Kodekomponente. Dabei erfolgt eine vor der Datenübertragung festgelegte und für die Zeit der Verbindung starre Zuweisung einer bestimmten Kapazitätsfläche, bestehend aus mehr oder weniger vielen Frequenzen, Zeitschlitzen und/oder Kodes. Dies entspricht einem "Zusammenkleben von einzelnen Komponenten" entsprechend der gewünschten hohen, mittleren oder niedrigen Datenübertragungsrate.

Aus der US 5,373,502 ist ein Datenübertragungssystem mit variablem Verkehrsaufkommen bekannt, bei dem der Datenstrom in Zeitintervalle unterteilt wird, die abhängig vom momentanen Verkehr definierte, verschieden lange Teilintervalle aufweisen und in denen die Teilintervalle versehen mit orthogonalen Kodes über dasselbe Übertragungsmedium übertragen werden. Die Anzahl der einem einzelnen Teilnehmer bzw. dessen Station zugeteilten Übertragungskanäle wird von Übertragungsrahmen zu Übertragungsrahmen neu festgelegt unter Berücksichtigung der Übertragungsbedingungen früherer Rahmen.

Der Erfindung liegt die Aufgabe zugrunde, ein Verfahren und Vorrichtungen bereitzustellen, die in einem Mobil-Kommunikationssystem den Aufbau simultaner Verbindungen bei Aufrechterhaltung der mittleren Informationsübertragungsrate ermöglichen. Diese Aufgabe wird durch das Verfahren mit den Merkmalen des Patentanspruchs 1, die Mobilstation mit den Merkmalen des Patentanspruchs 15 und die Basisstation mit den Merkmalen des Patentanspruchs 16 gelöst. Weiterbildungen der Erfindung sind den Unteransprüchen zu entnehmen.

Ein Mobil-Kommunikationssystem sieht ein Zeitmultiplexverfahren für mehrere Verbindungen zwischen Mobilstationen und Basisstationen vor, wobei jeweils Informationen für eine bestehende Verbindung zwischen einer Mobilstation und einer Basisstation in Zeitschlitzen wiederkehrender Zeitrahmen übertragen werden. Erfindungsgemäß werden die Zeitschlitze in zumindest zwei Zeitrahmen, die für die Informationen der bestehenden Verbindung zwischen der Mobilstation und der Basisstation verwendet werden, komprimiert und die Übertragungsrate für die in den verbleibenden Zeitschlitzen enthaltenen Informationen erhöht. Die durch die Komprimierung entstehenden freien Zeitschlitze werden zur gleichzeitigen Übertragung von Informationen zumindest einer parallelen, von der bestehenden Verbindung unabhängigen Verbindung zwischen derselben Mobilstation und einer Basisstation genutzt.

Durch die Komprimierung der Zeitschlitze für die Informationsübertragung der bereits bestehenden Verbindung kann die Mobilstation in den freigewordenen Zeitschlitzen gleichzeitig eine oder mehrere, weitere unabhängige Verbindungen aufbauen. Dies ermöglicht der Mobilstation - unabhängig vom jeweiligen Verkehrsaufkommen - die Nutzung mehrerer simultaner Verbindungen zu einer oder auch verschiedenen Basisstationen. Durch die Erhöhung der Informationsübertragungsrate in den verbleibenden Zeitschlitzen für die erste Verbindung kann die mittlere Informationsübertragungsrate des gesamten Informationsstromes - z.B. in einem Multirahmen mit mehreren Zeitrahmen - beibehalten. Zusätzlich vorteilhafter Effekt ist die bessere Ausnutzung der funktechnischen Ressourcen durch zumindest eine hinzukommende parallele Verbindung, ohne die Bandbreite steigern zu müssen.

Vorteilhafte Anwendungen der Erfindung bestehen für die Mobilstation darin, die getrennten, voneinander unabhängigen Verbindungen für Multimedia oder multiple Dienste, wie z.B. Daten- und Sprachdienste, gleichzeitig zu nutzen. Besonders vorteilhaft wirkt sich die Erfindung für eine unterbrechungsfreie Weiterschaltung einer bestehenden Verbindung (handover) aus, da vorab die zweite Verbindung zu einer Ziel-Basisstation aufgebaut und die ausreichende Qualität dieser Verbindung überprüft sowie die erforderliche Synchronisation durchgeführt werden kann, bevor anschliessend - abhängig von der ermittelten Qualität der neuen Verbindung - die unterbrechungsfreie Übergabe erfolgt und die bisherige Verbindung ausgelöst wird.

Eine vorteilhafte Anwendung der Erfindung besteht für die Mobilstation auch darin, die Komprimierung der Zeitschlitze zur Nachbarzellenmessung für das Erkennen von benachbarten Basisstationen zu nutzen. Als besonders günstig hat sich der Suchmechanismus dann erwiesen, wenn das Mobil-Kommunikatiohssystem in einem TDD-Modus (time division duplex) betrieben wird, bei dem die Basisstationen und die Mobilstationen abwechselnd auf ein- und demselben Hochfrequenzkanal senden. Da die Nachbarbasisstationen nicht ständig senden, kann die Nachbarzellenmessung bei der TDD-Betriebsart erst durch die Komprimierung der Zeitschlitze bei einem erweiterten Zeitfenster von zumindest zwei Zeitrahmen überhaupt durchgeführt werden.

Von Vorteil ist es gemäß einer Weiterbildung der Erfindung, die Übertragung der Informationen der bestehenden Verbindung in regelmäßigen Abständen im jeweiligen Zeitschlitz aufeinanderfolgender Zeitrahmen eines Multirahmens ausgesetzt und durch die Informationsübertragung für die weitere Verbindung ersetzt wird.

Als günstig, da besonders einfach zu steuern, hat sich erwiesen, die Übertragung der Informationen der bestehenden Verbindung im Zeitschlitz zumindest jedes zweiten Zeitrahmens eines Multirahmens auszusetzen und durch die Informationsübertragung für die weitere Verbindung zu ersetzen.

Gemäß einer anderen Weiterbildung der Erfindung kann die Übertragung der Informationen der bestehenden Verbindung auch in unregelmäßigen Abständen im jeweiligen Zeitschlitz aufeinanderfolgender Zeitrahmen eines Multirahmens ausgesetzt und durch die Informationsübertragung für die weitere Verbindung ersetzt wird.

Vorzugsweise wird eine Anzahl von Kodes für Verbindungen der Mobilstation zu der Basisstation im Zeitschlitz vergeben und bei der Komprimierung der Zeitschlitze zur Steigerung der Informationsübertragungsrate erhöht. Dies ist eine besonders vorteilhafte Vorgehensweise, die insbesondere bei Ausprägung des Mobil-Kommunikationssystems als TDMA/CDMA Funk-Kommunikationssystem keinen steuerungstechnischen Zusatzaufwand bedeutet. Ein derartiges Kommunikationssystem weist durch Zeitschlitze gebildete Frequenzkanäle auf, in denen gleichzeitig Informationen mehrerer Verbindungen zwischen der Mobilstation und der Basisstation übertragen werden, wobei die Informationen unterschiedlicher Verbindungen gemäß einer verbindungsindividuellen Feinstruktur unterscheidbar sind.

Eine Mobilstation zur Durchführung des Verfahrens gemäß der Erfindung weist eine Signalverarbeitungseinrichtung zum Aufbau einer weiteren, von der bestehenden Verbindung unabhängigen Verbindung und eine Steuereinrichtung zum Auswählen der durch die Komprimierung entstehenden freien Zeitschlitze für die Übertragung der Informationen der unabhängigen Verbindung(en) auf.

Eine Basisstation zur Durchführung des Verfahrens nach der Erfindung umfasst eine Steuereinrichtung zum Komprimieren der Anzahl der Zeitschlitze in zumindest zwei wiederkehrenden Zeitrahmen, die für die Informationen der bestehenden Verbindung zwischen der Mobilstation und der Basisstation verwendet werden, und zum Erhöhen der Übertragungsrate für die in den verbleibenden Zeitschlitzen enthaltenen Informationen. Des weiteren ist eine Übertragungseinrichtung zum Aussenden von Signalisierungsinformationen an die Mobilstation vorgesehen, anhand der die Mobilstation die durch die Komprimierung entstehenden freien Zeitschlitze erkennt.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobil-Kommunikations systems,
- FIG 2: eine schematische Darstellung der Rahmenstruktur zur Informationsübertragung,
- FIG 3: Blockschaltbilder einer Basisstation und einer Mobilstation.

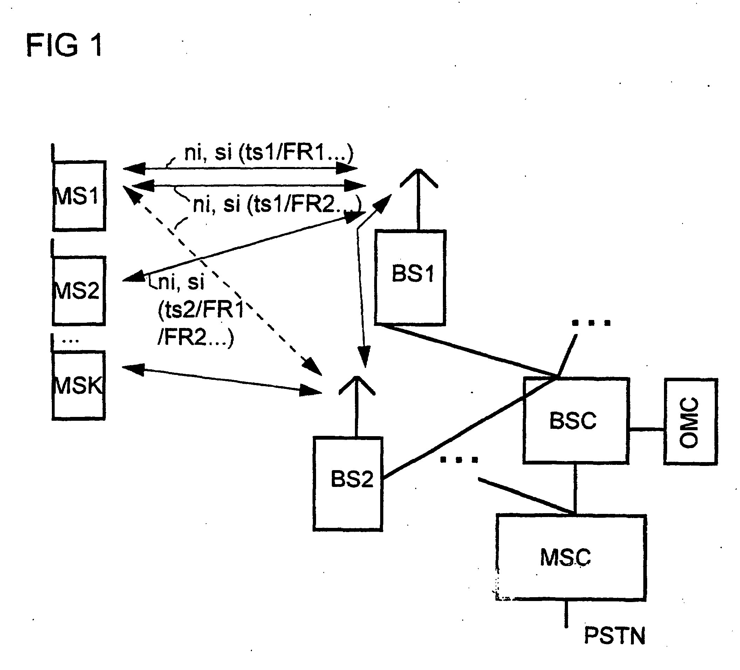

Das in FIG 1 dargestellte Mobil-Kommunikationssystem entspricht in seiner Struktur einem bekannten GSM-System, das eine Vielzahl von Mobilvermittlungsstellen MSC aufweist, die untereinander vernetzt sind bzw. den Zugang zu einem Festnetz PSTN herstellen. Diese Mobilvermittlungsstellen MSC sind mit jeweils zumindest einer Basisstationssteuerung BSC verbunden. Jede Basisstationssteuerung BSC ermöglicht wiederum eine Verbindung zu zumindest einer Basisstation, im vorliegenden Beispiel zu zwei Basisstationen BS1 und BS2. Eine solche Basisstation BS1, BS2 ist eine Funkstation, die zur Abdeckung eines Funkbereichs angeordnet ist, um über eine Funkschnittstelle eine Nachrichtenverbindung von/zu Mobilstationen MS in dem Funkbereich aufbauen, abbauen und aufrechthalten zu können.

In FIG 1 sind beispielhaft mehrere Verbindungen zur Übertragung von Nutzinformationen ni und Signalisierungsinformationen si zwischen Mobilstationen MS1, MS2 und der Basisstation BS1 sowie zwischen einer Mobilstation MSK und der Basisstation BS2 dargestellt. Ein Operations- und Wartungszentrum OMC realisiert Kontroll- und Wartungsfunktionen für das MobilKommunikationssystem bzw. für Teile davon. Die Funktionalität dieser Struktur ist auf andere Funk-Kommunikationssysteme übertragbar, in denen die Erfindung zum Einsatz kommen kann.

Das Mobil-Kommunikationssystem sieht ein Zeitmultiplexverfahren für die Verbindungen zwischen den Mobilstationen MS1, MS2 und MSK und den Basisstationen BS1 und BS2 vor. Dabei sind beispielsweise ein Zeitschlitz ts1 in wiederkehrenden Zeitrahmen FR1, FR2... zur Übertragung von Informationen ni, si für eine bestehende Verbindung zwischen der Mobilstation MS1 und der Basisstation BS1 sowie beispielsweise ein Zeitschlitz ts2 in wiederkehrenden Zeitrahmen FR1, FR2... zur Übertragung von Informationen ni, si für eine bestehende Verbindung zwischen der Mobilstation MS2 und der Basisstation BS1 reserviert. Erfindungsgemäß wird die Anzahl der Zeitschlitze ts1 bzw. ts2 in den Zeitrahmen FR1... , die für die Informationen der bestehenden Verbindung zwischen der Mobilstation MS1 bzw. MS2 und der Basisstation BS1 verwendet werden, derart komprimiert, daß die durch die Komprimierung entstehenden freien Zeitschlitze ts1 bzw. ts2 zur Übertragung von Informationen einer weiteren, von der bestehenden Verbindung unabhängigen Verbindung genutzt werden. Um die Informationsübertragungsrate im Mittel aufrechthalten zu können, wird die Übertragungsrate für die in den verbleibenden Zeitschlitzen ts1 bzw. ts2 enthaltenen Informationen erhöht.

Für das vorliegende Beispiel bedeutet dies, daß von den für die bestehende Verbindung jeweils zugeteilten Zeitschlitzen ts1 des ersten und zweiten Zeitrahmens FR1, FR2 der Zeitschlitz ts1 des ersten Zeitrahmens FR1 nach wie vor zur Informationsübertragung auf der bestehenden Verbindung benutzt, der Zeitschlitz ts1 des zweiten Zeitrahmens FR2 jedoch zur Übertragung von Informationen ni, si einer zweiten Verbindung von der Mobilstation MS1 verwendet wird. Die zweite Verbindung kann dann entweder zur bisherigen Basisstation BS1 - z.B. für die simultane Nutzung multipler Dienste wie Daten - und Sprachübertragung - oder zu einer anderen Basisstation BS2 - z.B. als Ziel-Basisstation bei Weiterschaltung der bestehenden Verbindung ("Handover") - aufgebaut werden. Im Fall des Handovers erfolgt dieser unterbrechungsfrei, da für die unabhängig von der bestehenden Verbindung aufgebaute zweite Verbindung zunächst die Qualität ausgetestet werden kann, bevor eine Übergabe durchgeführt wird. Durch die Erhöhung der Informationsrate im verbleibenden Zeitschlitz ts1 des Zeitrahmens FR1 gehen für die Mobilstation MS1 keine Informationen auf der bestehenden ersten Verbindung zur Basisstation BS1 verloren. Eine Steigerung der Übertragungsrate wird in vorteilhafter Weise durch Vergabe von Kodes in den Zeitschlitzen ts1... der Zeitrahmen erreicht, die eine Übertragung von Informationen paralleler Verbindungen entsprechend der Anzahl der Kodes pro Zeitschlitz ermöglichen.

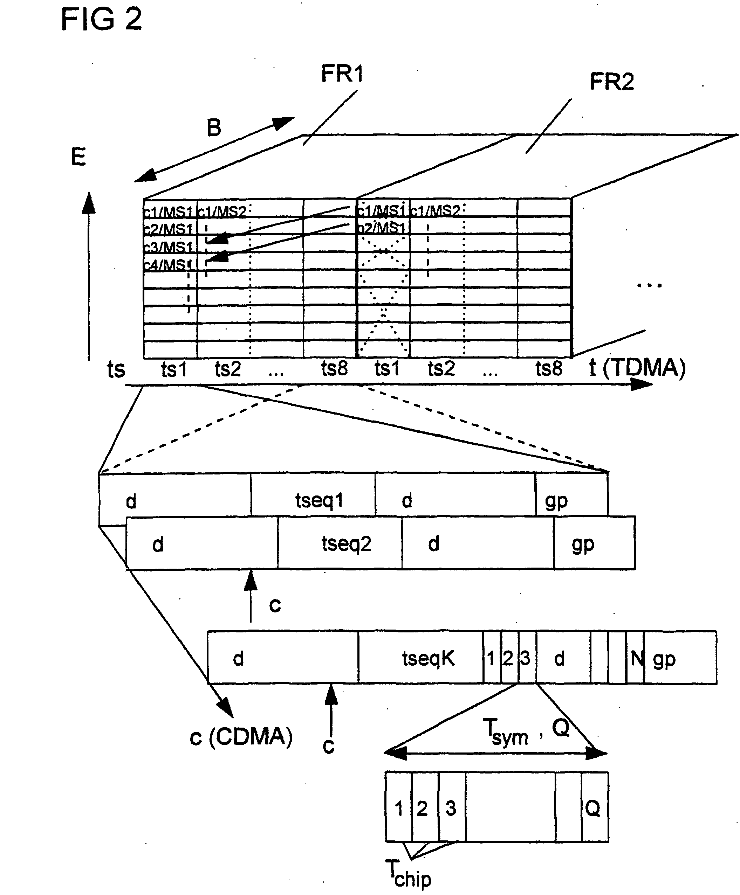

Aufbau und Inhalt der Zeitrahmen mit zur Informationsübertragung ist aus FIG 2 ersichtlich. Gemäß einer TDMA-Komponente ist eine Aufteilung eines breitbandigen Frequenzbereiches B = 1,6 MHz in mehrere Zeitschlitze ts, beispielsweise acht Zeitschlitze ts1...ts8, für jeden Zeitrahmen FR1, FR2... (TDMA-Rahmen) vorgesehen. Jeder Zeitschlitz ts innerhalb des Frequenzbereiches B bildet einen Frequenzkanal, Innerhalb der Frequenzkanäle bildenden Zeitschlitze ts1...ts8 werden Nutz-oder Signalisierungsinformationen mehrerer Verbindungen in Funkblöcken übertragen. Diese Funkblöcke zur Nutzdatenübertragung bestehen aus Abschnitten mit Daten d, in denen Abschnitte mit empfangsseitig bekannten Trainingssequenzen tseq1...tseqK eingebettet sind. Die Daten d sind verbindungsindividuell mit einer Feinstruktur, einem Teilnehmerkode c, gespreizt, so daß empfangsseitig beispielsweise K Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin weisen die Zeitschlitze ts1...ts8 jeweils eine Schutzzeit gp zur Kompensation unterschiedlicher Signalaufzeiten der Verbindungen auf.

Innerhalb eines breitbandigen Frequenzbereiches B werden die aufeinanderfolgenden Zeitschlitze ts nach einer Rahmenstruktur gegliedert. So werden beispielsweise acht Zeitschlitze ts1...ts8 jeweils zu einem Rahmen FR1, FR2 und die wiederkehrenden Rahmen FR1, FR2... zu einem Multirahmen zusammengefaßt. Im gewählten Beispiel nach FIG 1 bildet der Zeitschlitz ts1 in den Rahmen FR1, FR2... jeweils einen Frequenzkanal zur Übertragung der Informationen von/zu der Mobilstation MS1 und der Zeitschlitz ts2 in den Rahmen FR1, FR2... jeweils einen Frequenzkanal zur Übertragung der Informationen von/zu der Mobilstation MS2. Unterschieden werden die Teilnehmersignale der Mobilstation MS1 durch die Kodes c1, c2... im Zeitschlitz ts1 sowie die Teilnehmersignale der Mobilstation MS2 durch die Kodes c1... im Zeitschlitz ts2 gemäß der CDMA-Komponente.

Abweichend von der bekannten Vorgehensweise wird die Anzahl der Zeitschlitze ts1 in den aufeinanderfolgenden Zeitrahmen FR1, FR2..., die für die Informationsübertragung von/zu der Mobilstation MS1 auf der bestehenden Verbindung verwendet werden, komprimiert. Wird dies beispielsweise auf jeden zweiten Zeitrahmen FR2... im Multirahmen angewendet, können die in den jeweiligen Zeitrahmen frei gewordenen Zeitschlitze ts1 für zumindest eine weitere, von der ersten Verbindung unabhängige Verbindung genutzt werden. Die im Zeitschlitz ts1 des Zeitrahmens FR2 mit den Kodes c1 und c2 gespreizten Teilnehmersignale der Mobilstation MS1 werden im Zeitschlitz ts1 des Zeitrahmens FR1 übertragen und dort beispielsweise mit Kodes c3 und c4 versehen, um sie von den bereits enthaltenen Teilnehmersignalen sicher unterscheiden zu können. Dadurch erhöht sich die Informationsübertragungsrate in den komprimierten Zeitschlitzen, im vorliegenden Beispiel im Zeitschlitz ts1 jedes ersten, dritten, fünften usw. Zeitrahmens. In den durch die Komprimierung entstehenden freien Zeitschlitz ts1 jedes zweiten, vierten, sechsten usw. Zeitrahmens können an Stelle der bisherigen Informationen andere Nutz- oder Signalisierungsinformationen der weiteren Verbindungen, die die Mobilstation MS1 simultan nutzt, eingetragen werden. Gleiches gilt auch für die anderen Mobilstationen, auch wenn in FIG 2 nur am Beispiel der Verbindungen von/zu der Mobilstation MS1 die erfindungsgemäße Vorgehensweise beschrieben ist.

Die Übertragung der Informationen der bestehenden Verbindung kann allgemein in regelmäßigen Abständen - z.B. in jedem zweiten Zeitrahmen - der Zeitschlitze aufeinanderfolgender Zeitrahmen eines Multirahmens ausgesetzt und durch die Informationsübertragung für die weitere Verbindung(en) ersetzt werden. Auch die Übertragung der Informationen der bestehenden Verbindung in unregelmäßigen Abständen ist grundsätzlich möglich.

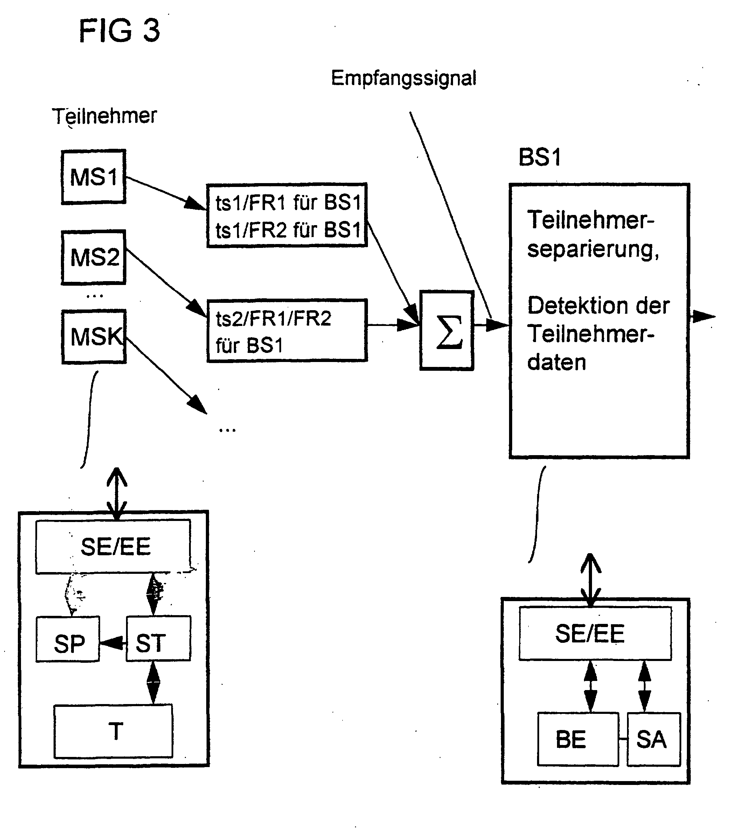

Anhand von FIG 3 wird die Struktur eines Frequenzkanals RACH für einen zufälligen Zugriff gezeigt. Der breitbandige Frequenzbereich B z.B. mit B = 1,6 MHz, der sich z.B. aus dem Frequenzband eines Organisationskanals des Mobilfunknetzes beaufschlagt mit dem Duplexabstand berechnet, beinhaltet vier Unterbereiche UB mit jeweils z.B. 200 kHz Bandbreite, die jeweils durch einen Bereich von 200 kHz getrennt sind, um gegenseitige Störungen zu verringern. Innerhalb dieser Unterbereiche UB können bei Bedarf Zugriffsfunkblöcke rab von den Mobilstationen MS ohne vorherige netzseitige Zuweisung und ohne Spreizung gesendet werden. Es können also GSM random access Funkblöcke verwendet werden.

Eine vorteilhafte Anwendung der Erfindung besteht für die Mobilstation auch darin, die Komprimierung der Zeitschlitze zur Nachbarzellenmessung für das Erkennen von benachbarten Basisstationen zu nutzen. Als besonders günstig hat sich der Suchmechanismus dann erwiesen, wenn das Mobil-Kommunikationssystem in einem TDD-Modus (time division duplex) betrieben wird, bei dem die Basisstationen und die Mobilstationen abwechselnd auf ein- und demselben Hochfrequenzkanal senden. Da die Nachbarbasisstationen nicht ständig senden, kann die Nachbarzellenmessung bei der TDD-Betriebsart erst durch die Komprimierung der Zeitschlitze bei einem erweiterten Zeitfenster von zumindest zwei Zeitrahmen überhaupt durchgeführt werden.

FIG 3 zeigt an einem Beispiel die Funkübertragung in Aufwärtsrichtung von Mobilstationen MS1, MS2 zu einer einzigen Basisstation BS1. Die Signale gelangen nach einer Übertragung über die Frequenzkanäle zu der empfangenden Basisstation BS1. So werden die Teilnehmersignale der Mobilstation MS1 im Zeitschlitz ts1 des Zeitrahmens FR1 über die bereits bestehende erste Verbindung und andere Teilnehmersignale der Mobilstation MS1 im Zeitschlitz ts1 des Zeitrahmens FR2 über die unabhängige zweite Verbindung zur Basisstation BS1 übertragen. Es treffen weiterhin die Teilnehmersignale der Mobilstation MS2, die im Zeitschlitz ts2 des Zeitrahmens FR1 und des Zeitrahmens FR2 enthalten sind, ein. Die Basisstation BS1 wertet das Empfangssignal aus, separiert die Teilnehmersignale in den Frequenzkanälen nach den unterschiedlichen Verbindungen und detektiert die Informationen nach Nutzinformationen und Signalisierungsinformationen.

Die Basisstation enthält zu diesem Zweck eine Sende/Empfangseinrichtung SE/EE, die die Empfangssignale verstärkt, ins Basisband umsetzt und demoduliert. In einem Analog/Digital-Wandler werden die Empfangssignale in Symbole mit diskretem Wertevorrat umgewandelt, beispielsweise digitalisiert. Von einer Signalauswerteeinrichtung SA, die z.B. als digitaler Signalprozessor einen JD-Prozessor zum Detektieren der Nutzinformationen und der Signalisierungsinformationen nach dem JD-Verfahren (joint detection) enthält, werden die gemäß der TDMA/CDMA-Komponente übertragenen Funkblöcke ausgewertet.

Eine Steuereinrichtung BE veranlaßt, daß die Anzahl der Zeitschlitze - z.B ts1 - in den wiederholt übertragenen Zeitrahmen FR1, FR2..., die für die Informationsübertragung auf der bestehenden Verbindung genutzt werden, komprimiert und die Übertragungsrate für die in den verbleibenden Zeitschlitzen ts1 enthaltenen Informationen erhöht wird. Zuvor empfängt sie von der Mobilstation MS1 eine Signalisierungsinformation, die den Wunsch der Mobilstation MS1 zum Aufbau einer weiteren Verbindung für eine andere Anwendung signalisiert, und reagiert in obiger Weise. Die Übertragungseinrichtung SE/EE sendet eine Signalisierungsinformation an die Mobilstation MS1 zurück, in der die durch die Komprimierung entstehenden freien Zeitschlitze der Mobilstation MS mitgeteilt werden.

Die Mobilstation enthält ein Bedienfeld T, eine Signalverarbeitungseinrichtung SP, eine Steuereinrichtung ST und eine Sende/Empfangseinrichtung SE/EE. Am Bedienfeld T kann der Teilnehmer Eingaben vornehmen, u.a. eine Eingabe für den Verbindungsaufbauwunsch während der bestehenden Verbindung. In der Signalverarbeitungseinrichtung SP wird der Aufbau zumindest einer weiteren, von der bestehenden Verbindung unabhängigen Verbindung initiiert, sobald die Steuereinrichtung SE den oder die Zeitschlitze aus den von der Basisstation übermittelten möglichen Zeitschlitzen ausgewählt hat.

## Patentansprüche

1. Verfahren zur Informationsübertragung über eine Funkschnittstelle eines Mobil-Kommunikationssystems, das ein Zeitmultiplexverfahren (z.B. TDMA) für mehrere Verbindungen zwischen Mobilstationen (MS1, MS2, MSK) und Basisstationen (BS1, BS2) nutzt und dabei jeweils Informationen (ni, si) für eine bestehende Verbindung zwischen einer Mobilstation (MS1) und einer Basisstation (BS1) in Zeitschlitzen (ts1...ts8) wiederkehrender Zeitrahmen (FR1, FR2) überträgt,
**dadurch gekennzeichnet,**
- **dass** die Anzahl der Zeitschlitze (z.B. ts1), die in zumindest zwei Zeitrahmen (FR1, FR2) für die Übertragung der Informationen (ni, si) einer zwischen einer Mobilstation (MS1) und einer Basisstation (BS1) bestehenden Verbindung verwendet werden, reduziert werden und die Übertragungsrate für die in den verbleibenden Zeitschlitzen (z.B. ts1/FR2) enthaltenen Informationen erhöht wird, und
- **dass** die durch die Reduzierung entstehenden freien Zeitschlitze (z.B. ts1/FR2) zur gleichzeitigen Übertragung von Informationen (ni, si) zumindest einer parallelen, von der bestehenden Verbindung unabhängigen Verbindung zwischen derselben Mobilstation (MS1) und einer Basisstation (BS1, BS2) genutzt werden.

2. Verfahren nach Anspruch 1, bei dem
die Übertragung der Informationen (ni, si) der bestehenden Verbindung in regelmäßigen Abständen im jeweiligen Zeitschlitz (ts1) aufeinanderfolgender Zeitrahmen (FR1, FR2) eines Multirahmens ausgesetzt und durch die Informationsübertragung für die weitere Verbindung ersetzt wird.

3. Verfahren nach Anspruch 1 oder 2, bei dem
die Übertragung der Informationen (ni, si) der bestehenden Verbindung im Zeitschlitz (ts1) zumindest jedes zweiten Zeitrahmens (FR2) eines Multirahmens ausgesetzt und durch die Informationsübertragungs für die weitere Verbindung ersetzt wird.

4. Verfahren nach Anspruch 1, bei dem
die Übertragung der Informationen (ni, si) der bestehenden Verbindung in unregelmäßigen Abständen im jeweiligen Zeitschlitz (ts1) aufeinanderfolgender Zeitrahmen (FR1, FR2) eines Multirahmens ausgesetzt und durch die Informationsübertragung für die weitere Verbindung ersetzt wird.

5. Verfahren nach einem der vorherigen Ansprüche, bei dem eine Anzahl von Kodes (z.B. c1 bis c2) für Verbindungen der Mobilstation (MS1) zu der Basisstation (BS1) im Zeitschlitz (ts1) vergeben und bei der Reduzierung der Anzahl der Zeitschlitze (z.B. ts1) zur Steigerung der Informationsübertragungsrate erhöht wird.

6. Verfahren nach einem der vorherigen Ansprüche, bei dem das Mobil-Kommunikationssystem als TDMA/CDMA Funk-Kommunikationssystem ausgeprägt ist, mit durch Zeitschlitze (ts1... ts8) gebildeten Frequenzkanälen, in denen gleichzeitig Informationen (ni, si) mehrerer Verbindungen zwischen der Mobilstation (MS1) und der Basisstation (BS1) übertragen werden, wobei die Informationen (ni, si) unterschiedlicher Verbindungen gemäß einer verbindungsindividuellen Feinstruktur unterscheidbar sind.

7. Verfahren nach einem der vorherigen Ansprüche, bei dem die Reduzierung der Anzahl der Zeitschlitze (ts1) von der Mobilstation (MS1) zum Aufbau zumindest einer simultanen Verbindung zu derselben Basisstation (BS1) oder zu einer oder mehreren anderen Basisstationen (BS2) genutzt wird.

8. Verfahren nach Anspruch 7, bei dem
die parallelen Verbindungen von der Mobilstation (MS1) zur Informationsübertragung für mehrere Dienste oder Anwendungen parallel genutzt werden.

9. Verfahren nach Anspruch 8, bei dem
die parallelen Verbindungen von der Mobilstation (MS1) zur Informationsübertragung für einen Sprachdienst und einen Datendienst parallel genutzt werden.

10. Verfahren nach einem der vorherigen Ansprüche, bei dem die Komprimierung der Zeitschlitze (ts1) von der Mobilstation (MS1) zum Aufbau einer simultanen Verbindung zu einer Ziel-Basisstation (BS2), zu der die bestehende Verbindung weitergeschaltet werden soll, genutzt wird.

11. Verfahren nach Anspruch 10, bei dem
die Synchronisation der simultanen Verbindung zu der Ziel-Basisstation (BS2) durchgeführt und deren Qualität überprüft wird, bevor zur neuen Verbindung weitergeschaltet und die bisher bestehende Verbindung ausgelöst wird.

12. Verfahren nach einem der vorherigen Ansprüche, bei dem die Reduzierung der Anzahl der Zeitschlitze (ts1) von der Mobilstation (MS1) zum Aufbau einer simultanen Verbindung zu derselben Basisstation (BS1) oder zu einer oder mehreren anderen Basisstätionen (BS2) genutzt wird.

13. Verfahren nach einem der vorherigen Ansprüche, bei dem die Reduzierung der Anzahl der Zeitschlitze (ts1) von der Mobilstation (MS1) zur Nachbarzellenmessung für das Erkennen von benachbarten Basisstationen (BS2) genutzt wird.

14. Verfahren nach Anspruch 13, bei dem
das Mobil-Kommunikationssystem in einem TDD-Modus betrieben wird, bei dem die Basisstationen (BS1, BS2) und die Mobilstationen (MS1, MS2, MSK) abwechselnd auf ein- und demselben Hochfrequenzkanal senden.

15. Mobilstation zur Informationsübertragung über eine Funkschnittstelle eines Mobil-Kommunikationssystems, das ein Zeitmultiplexverfahren (z.B. TDMA) für mehrere Verbindungen zwischen der Mobilstation (MS1) und einer Basisstation (BS1) nutzt und dabei jeweils Informationen (ni, si) für eine bestehende Verbindung in Zeitschlitzen (ts1 ... ts8) wiederkehrender Zeitrahmen (FR1, FR2) überträgt,
**gekennzeichnet durch**
- eine Steuereinrichtung (SE) zur Auswahl zumindest eines von der Basisstation (BS1) übermittelten zuvor **durch** Reduzierung der Anzahl der Zeitschlitze (z.B. ts1), die in zumindest zwei Zeitrahmen (FR1, FR2) zur Übertragung der Informationen (ni, si) der bestehenden Verbindung vorgesehen sind, freigewordenen Zeitschlitzes, und
- eine Signalverarbeitungseinrichtung (SP) zum Aufbau zumindest einer parallelen, von der bestehenden Verbindung unabhängigen Verbindung für die gleichzeitige Übertragung von Informationen (ni, si) zu einer Basisstation (BS1, BS2) in diesem ausgewählten freigewordenen Zeitschlitz (ts1).

16. Basisstation zur Informationsübertragung über eine Funkschnittstelle eines Mobil-Kommunikationssystems, das ein Zeitmultiplexverfahren (z.B. TDMA) für mehrere Verbindungen zwischen einer Mobilstation (MS1) und der Basisstation (BS1) nutzt und dabei jeweils Informationen (ni, si) für eine bestehende Verbindung in Zeitschlitzen (ts1...ts8) wiederkehrender Zeitrahmen (FR1, FR2) überträgt,
**gekennzeichnet durch**
- eine Steuereinrichtung (BE) zur Reduzierung der Anzahl der Zeitschlitze (ts1) in zumindest zwei Zeitrahmen (FR1, FR2), die für die Informationen der bestehenden Verbindung zwischen der Mobilstation (MS1) und der Basisstation (BS1) vorgesehen sind, und zur Erhöhung der Übertragungsrate für die in den verbleibenden Zeitschlitzen (ts1) enthaltenen Informationen,
- eine Übertragungseinrichtung (SE/EE) zum Aussenden von Signalisierungsinformationen (si) über die **durch** die Reduzierung freigewordenen Zeitschlitze (ts1) an die Mobilstation (MS1), die daraus einen Zeitschlitz (ts1) auswählt und zumindest eine parallele, von der bestehenden Verbindung unabhängigen Verbindung für die gleichzeitige Übertragung von Informationen (ni, si) zu einer Basisstation (BS1, BS2) aufbaut.

## Claims

1. Method for information transmission via a radio interface in a mobile communications system which uses a time-division multiplexing method (for example TDMA) for a number of connections between mobile stations (MS1, MS2, MSK) and base stations (BS1, BS2) and, in the process, in each case transmits information items (ni, si) for an existing connection between a mobile station (MS1) and a base station (BS1) in timeslots (ts1...ts8) in recurring time frames (FR1, FR2),
**characterized**
- **in that** the number of timeslots (for example ts1) which are used in at least two time frames (FR1, FR2) for transmitting the information items (ni, si) for a connection which exists between a mobile station (MS1) and a base station (BS1) is reduced, and the transmission rate for the information items contained in the remaining timeslots (for example ts1/FR2) is increased, and
- **in that** the free timeslots (for example ts1/FR2) which result from the reduction are used for simultaneous transmission of information items (ni, si) for at least one parallel connection, which is independent of the existing connection, between the same mobile station (MS1) and a base station (BS1, BS2).

2. Method according to Claim 1, in which
the transmission of the information items (ni, si) for the existing connection at regular intervals in the respective timeslot (ts1) of successive time frames (FR1, FR2) in a superframe is stopped, and is replaced by the information transmission for the further connection.

3. Method according to Claim 1 or 2, in which
the transmission of the information items (ni, si) for the existing connection in the timeslot (ts1) of at least every alternate time frame (FR2) in a superframe is stopped, and is replaced by the information transmission for the further connection.

4. Method according to Claim 1, in which
the transmission of the information items (ni, si) for the existing connection at irregular intervals in the respective timeslot (ts1) of successive time frames (FR1, FR2) in a superframe is stopped, and is replaced by the information transmission for the further connection.

5. Method according to one of the preceding claims, in which
a number of codes (for example c1 to c2) for connections from the mobile station (MS1) to the base station (BS1) in the timeslot (ts1) are given away, and the number of timeslots (for example ts1) in the reduction is increased in order to increase the information transmission rate.

6. Method according to one of the preceding claims, in which
the mobile communications system is in the form of a TDMA/CDMA radio communications system with frequency channels which are formed by timeslots (ts1...ts8) in which information items (ni, si) for a number of connections are transmitted simultaneously between the mobile station (MS1) and the base station (BS1), with the information items (ni, si) for different connections being distinguishable on the basis of a connection-specific fine structure.

7. Method according to one of the preceding claims, in which
the reduction in the number of timeslots (ts1) from the mobile station (MS1) is used for setting up at least one simultaneous connection to the same base station (BS1) or to one or more other base stations (BS2).

8. Method according to Claim 7, in which
the parallel connections from the mobile station (MS1) are used for information transmission for a number of services or applications in parallel.

9. Method according to Claim 8, in which
the parallel connections from the mobile station (MS1) are used for information transmission for a voice service and a data service in parallel.

10. Method according to one of the preceding claims, in which the compression of the timeslots (ts1) from the mobile station (MS1) is used for setting up a simultaneous connection to a destination base station (BS2) to which the existing connection is intended to be passed on.

11. Method according to Claim 10, in which
the synchronization of the simultaneous connection to the destination base station (BS2) is carried out, and its quality is checked, before switching on to the new connection, and before clearing the previously existing connection.

12. Method according to one of the preceding claims, in which the reduction in the number of timeslots (ts1) from the mobile station (MS1) is used for setting up a simultaneous connection to the same base station (BS1) or to one or more other base stations (BS2).

13. Method according to one of the preceding claims, in which
the reduction in the number of timeslots (ts1) from the mobile station (MS1) is used for adjacent cell measurement in order to identify adjacent base stations (BS2).

14. Method according to Claim 13, in which
the mobile communications system is operated using a TDD mode, in which the base stations (BS1, BS2) and the mobile stations (MS1, MS2, MSK) transmit alternately on one and the same radio-frequency channel.

15. Mobile station for information transmission via a radio interface of a mobile communications system, which uses a time-division multiplexing method (for example TDMA) for a number of connections between the mobile station (MS1) and a base station (BS1) and, in the process, in each case transmits information items (ni, si) for an existing connection in timeslots (ts1...ts8) in recurring time frames (FR1, FR2),
**characterized by**
- a control device (SE) for selecting at least one timeslot which has become free which was previously transmitted by the base station (BS1) by reducing the number of timeslots (for example ts1) which are provided in at least two time frames (FR1, FR2) for transmitting the information items (ni, si) for the existing connection, and
- a signal processing device (SP) for setting up at least one parallel connection, which is independent of the existing connection, for simultaneous transmission of information items (ni, si) to a base station (BS1, BS2) in this selected timeslot (ts1) which has become free.

16. Base station for information transmission via a radio interface of a mobile communications system, which uses a time-division multiplexing method (for example TDMA) for a number of connections between a mobile station (MS1) and the base station (BS1) and, in the process, in each case transmits information items (ni, si) for an existing connection in timeslots (ts1...ts8) in recurring time frames (FR1, FR2),
**characterized by**
- a control device (BE) for reducing the number of timeslots (ts1) in at least two time frames (FR1, FR2) which are provided for the information items for the existing connection between the mobile station (MS1) and the base station (BS1), and for increasing the transmission rate for the information items contained in the remaining timeslots (ts1),
- a transmission device (SE/EE) for transmitting signalling information items (si), in the timeslots (ts1) which have become free due to the reduction, to the mobile station (MS1), which selects from these timeslots a timeslot (ts1) and sets up at least one parallel connection, which is independent of the existing connection, for simultaneous transmission of information items (ni, si) to a base station (BS1, BS2).

## Revendications

1. Procédé destiné à la transmission d'informations par l'intermédiaire d'une interface radio d'un système de communication mobile qui utilise un procédé de multiplexage temporel (par exemple, TDMA ou, en français, AMRT) pour plusieurs liaisons entre des postes mobiles (MS1, MS2, MSK) et des stations de base (BS1, BS2) et qui transmet pour cela des informations (ni, si) pour une communication existant entre un poste mobile (MS1) et une station de base (BS1) dans des créneaux temporels (ts1, ..., ts8) de cadres temporels récurrents (FR1, FR2),
**caractérisé par le fait**
- **que** le nombre de créneaux temporels (par exemple, ts1), qui sont utilisés dans au moins deux cadres temporels (FR1, FR2) pour la transmission des informations (ni, si) d'une communication existant entre un poste mobile (MS1) et une station de base (BS1), est réduit et le débit de transmission pour les informations contenues dans les créneaux temporels restants (par exemple, ts1/FR2) est augmenté et
- **que** les créneaux temporels libérés par la réduction (par exemple, ts1/FR2) sont utilisés pour la transmission simultanée d'informations (ni, si) d'au moins une liaison parallèle, indépendante de la liaison existante, entre le même poste mobile (MS1) et une station de base (BS1, BS2).

2. Procédé selon la revendication 1 au cours duquel
la transmission des informations (ni, si) de la communication existante est interrompue à des intervalles de temps réguliers dans le créneau temporel respectif (ts1) de cadres temporels successifs (FR1, FR2) d'un multicadre et remplacée par la transmission des informations pour la liaison supplémentaire.

3. Procédé selon la revendication 1 ou 2 au cours duquel
la transmission des informations (ni, si) de la communication existante est interrompue dans le créneau temporel respectif (ts1) d'au moins un cadre temporel (FR1) sur deux d'un multicadre et remplacée par la transmission des informations pour la liaison supplémentaire.

4. Procédé selon la revendication 1 au cours duquel
la transmission des informations (ni, si) de la communication existante est interrompue à des intervalles de temps irréguliers dans le créneau temporel respectif (ts1) de cadres temporels successifs (FR1, FR2) d'un multicadre et remplacée par la transmission des informations pour la liaison supplémentaire.

5. Procédé selon l'une des revendications précédentes au cours duquel
un nombre de codes (par exemple, c1 à c2) sont distribués pour des liaisons du poste mobile (MS1) vers la station de base (BS1) dans le créneau temporel (ts1) et ce nombre est augmenté, lors de la réduction du nombre de créneaux temporels (par exemple, ts1), pour élever le débit de transmission des informations.

6. Procédé selon l'une des revendications précédentes dans lequel
le système de communication mobile est édifié comme système de communication radio TDMA/CDMA (ou, en français, AMRT/AMDC) avec des canaux de fréquences formés par des créneaux temporels (ts1, ..., ts8) sur lesquels des informations relatives à plusieurs liaisons sont transmises simultanément entre le poste mobile (MS1) et la station de base (BS1), les informations (ni, si) de différentes liaisons pouvant être discernées conformément à une structure fine spécifique à la liaison.

7. Procédé selon l'une des revendications précédentes dans lequel
la réduction du nombre de créneaux temporels (ts1) est utilisé par le poste mobile (MS1) pour établir au moins une liaison simultanée vers la même station de base (BS1) ou vers une ou plusieurs autres stations de base (BS2).

8. Procédé selon la revendication 7 dans lequel
les liaisons parallèles sont utilisées parallèlement par le poste mobile (MS1) pour la transmission d'informations pour plusieurs services ou applications.

9. Procédé selon la revendication 8 dans lequel
les liaisons parallèles sont utilisées parallèlement par le poste mobile (MS1) pour la transmission d'informations pour un service vocal ou un service de données.

10. Procédé selon l'une des revendications précédentes dans lequel
la compression des créneaux temporels (ts1) est utilisée par le poste mobile (MS1) pour établir une liaison simultanée vers une station de base de destination (BS2), vers laquelle on veut renvoyer la communication existante.

11. Procédé selon la revendication 10 dans lequel
la synchronisation de la liaison simultanée vers la station de base de destination (BS2) est exécutée et sa qualité est vérifiée avant que le renvoi sur la nouvelle liaison ne soit commuté et la liaison existant jusqu'à ce moment ne soit libérée.

12. Procédé selon l'une des revendications précédentes dans lequel
la réduction du nombre de créneaux temporels (ts1) est utilisé par le poste mobile (MS1) pour établir une liaison simultanée vers la même station de base (BS1) ou vers une ou plusieurs autres stations de base (BS2).

13. Procédé selon l'une des revendications précédentes dans lequel
la réduction du nombre de créneaux temporels (ts1) est utilisée par le poste mobile (MS1) pour mesurer les cellules voisines en vue de reconnaître les stations de base voisines (BS2).

14. Procédé selon la revendication 13 dans lequel
le système de communication mobile est exploité dans un mode TDD dans lequel les stations de base (BS1, BS2) et les stations mobiles (MS1, MS2, MSK) émettent l'une après l'autre sur un seul et même canal haute fréquence.

15. Poste mobile destiné à la transmission d'informations par l'intermédiaire d'une interface radio d'un système de communication mobile qui utilise un procédé de multiplexage temporel (par exemple, TDMA) pour plusieurs liaisons entre le poste mobile (MS1) et une station de base (BS1) et qui transmet pour cela des informations (ni, si) pour une communication existant entre un poste mobile (MS1) et une station de base (BS1) dans des créneaux temporels (ts1, ..., ts8) de cadres temporels récurrents (FR1, FR2),
**caractérisé par**
- un dispositif de contrôle (SE) prévu pour choisir au moins un créneau temporel transmis par la station de base (BS1), libéré au préalable par réduction du nombre de créneaux temporels (par exemple, ts1), qui sont utilisés dans au moins deux cadres temporels (FR1, FR2) pour la transmission des informations (ni, si) de la communication existante et
- par un dispositif de traitement des signaux (SP) prévu pour établir au moins une liaison parallèle, indépendante de la liaison existante, destinée à la transmission simultanée d'informations (ni, si) vers une station de base (BS1, BS2) dans ce créneau temporel (ts1) libéré et choisi.

16. Station de base destinée à la transmission d'informations par l'intermédiaire d'une interface radio d'un système de communication mobile, qui utilise un procédé de multiplexage temporel (par exemple, TDMA) pour plusieurs liaisons entre le poste mobile (MS1) et une station de base (BS1) et qui transmet pour cela des informations (ni, si) pour une communication existante dans des créneaux temporels (ts1, ..., ts8) de cadres temporels récurrents (FR1, FR2),
**caractérisé par**
- un dispositif de contrôle (SE) prévu pour la réduction du nombre de créneaux temporels (ts1), dans au moins deux cadres temporels (FR1, FR2), qui sont prévus pour les informations (ni, si) de la communication existante entre le poste mobile (MS1) et la station de base (BS1) et pour l'augmentation du débit de transmission pour les informations contenues dans les créneaux temporels (ts1) restants,
- un dispositif de transmission (SE/EE) destiné à envoyer, par l'intermédiaire des créneaux temporels (ts1) libérés en raison de la réduction, des informations de signalisation (si) au poste mobile (MS1), qui choisit un créneau temporel (ts1) parmi les créneaux temporels (ts1) libérés en raison de la réduction et établit au moins une liaison parallèle, indépendante de la liaison existante, destinée à la transmission simultanée d'informations (ni, si) vers une station de base (BS1, BS2).
